# FASCICULE DE BREVET EUROPEEN

(11) **EP 3 191 255 B1**
(45) Date de publication et mention de la délivrance du brevet: **16.02.2022**
(21) Numéro de dépôt: 15763968.3
(22) Date de dépôt: 03.09.2015
(51) Int. Cl.: B23P 6/00, F01D 25/24, B23K 9/04, B23K 9/167, B23K 9/23

(54) **PROCÉDÉ DE RÉPARATION D'UN RAIL AMONT D'UN CARTER DE TURBINE DE TURBOMACHINE**
VERFAHREN ZUM REPARIEREN EINER VORGELAGERTEN SCHIENE EINES TURBINENMOTORTURBINENGEHÄUSES
METHOD FOR REPAIRING AN UPSTREAM RAIL OF A TURBINE ENGINE TURBINE CASING

(30) Priorité: 11.09.2014 FR 1458555
(43) Date de publication de la demande: 19.07.2017
(73) Titulaire: SAFRAN AIRCRAFT ENGINES, 75015 Paris (FR)
(72) Inventeur: DELAPORTE, Nicolas Daniel, F-77390 Chaumes en Brie (FR); BILIONIERE, Marina, Wilma, F-94140 Alforville (FR); BREUGNOT, Thierry Michel, F-77370 Nangis (FR); DURAND, Didier, Noël, F-77340 Pontault Combault (FR)
(74) Mandataire: Cabinet Camus Lebkiri
(86) Numéro de dépôt international: PCT/FR2015/052335
(87) Numéro de publication internationale: WO 2016/038282

(56) Documents cités:
- EP-A1- 2 113 330
- EP-A1- 2 832 489
- EP-A2- 2 039 882
- FR-A1- 2 959 434
- US-A1- 2014 234 098

## Description

### DOMAINE TECHNIQUE DE L'INVENTION

L'invention se rapporte au domaine général des organes des turbomachines. Elle concerne plus particulièrement un procédé de réparation d'un rail amont d'un carter de turbine de turbomachine.

### ARRIERE PLAN TECHNOLOGIQUE DE L'INVENTION

Les turbomachines aéronautiques comprennent classiquement plusieurs modules tels qu'un compresseur haute pression, une chambre de combustion, une turbine haute pression suivie d'une turbine basse pression, qui entraînent le compresseur BP ou HP correspondant, et un système d'éjection des gaz. Chacune des turbines est formée d'un ou plusieurs étages, chaque étage comportant successivement une roue d'aubes fixes ou distributeurs et une roue d'aubes mobiles.

Les aubes mobiles sont portées à leur partie inférieure par le rotor de la turbomachine et fixées sur un disque de turbine. Les aubes de distributeur sont en revanche tenues par leur partie supérieure et fixées sur un carter, dénommé carter de turbine. Les termes « inférieur » et « supérieur » sont à considérer relativement à une distance à l'axe de la turbomachine : la partie inférieure d'une pièce, lorsque ladite pièce est installée dans la turbomachine, est plus proche de l'axe de la turbomachine que la partie supérieure de ladite pièce.

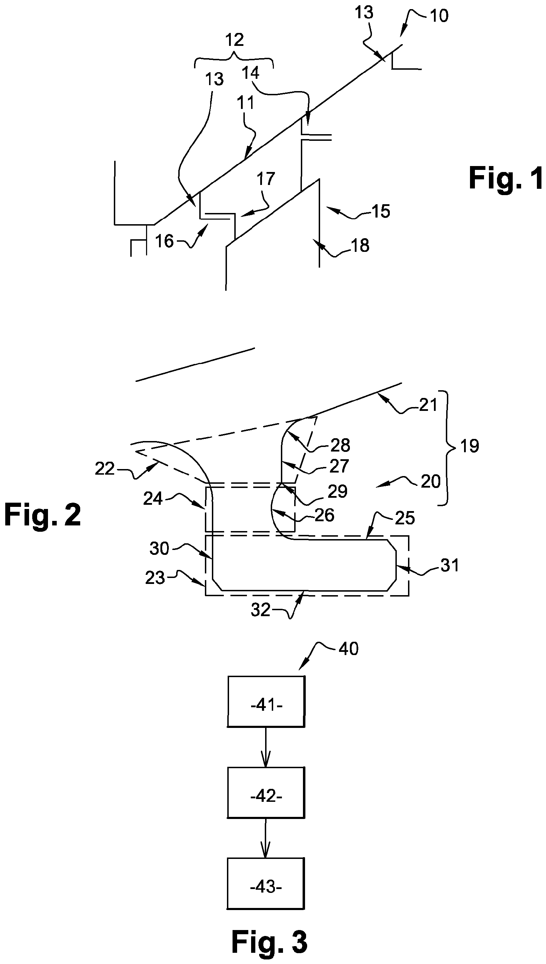

En référence à la figure 1, un carter de turbine 10 présente, en coupe longitudinale, un corps de carter 11 sur lequel sont fixées une pluralité de couples 12 de rails, chaque couple 12 de rails étant composé d'un rail annulaire amont 13 et d'un rail annulaire aval 14, chaque couple 12 de rails étant destiné à maintenir des distributeurs 15 d'un étage de turbine. Il y a ainsi autant de couples de rails que d'étages de turbine. Les termes « amont » et « aval » sont à considérer par rapport à une direction générale d'écoulement de fluides à travers la turbomachine, allant de l'amont vers l'aval.

Les rails amont 13 comportent chacun un plateau 16 s'étendent axialement (en référence à l'axe de rotation de la turbomachine) vers l'aval. Sur chaque face supérieure de plateau 16 de rail amont 13 vient se poser un crochet amont 17 d'un distributeur, solidaire d'une plateforme du distributeur 18, qui s'étend également axialement vers l'amont. Le distributeur 18 est porté à son extrémité aval par le rail aval 14 associé au rail amont 13 considéré.

On constate après un certain temps d'utilisation une usure des faces supérieures des plateaux des rails amont, résultant des micro-déplacements créés par les vibrations et les différences de dilatation thermique entre les rails amont et les crochets amont. Cette usure peut modifier l'inclinaison des distributeurs qui peuvent alors basculer autour des rails aval et altérer le fonctionnement du moteur.

Ainsi, lorsqu'une face supérieure d'un rail amont est abimée, il est nécessaire de réparer le rail.

Un procédé de réparation connu consiste à recouvrir d'un métal d'apport par soudage la face supérieure du rail, afin d'ajouter de la matière, puis d'usiner la face recouverte. Ce procédé de réparation présente toutefois un inconvénient majeur. La surface supérieure est accolée à une surface concave d'une portion du rail très sollicitée. Un ressaut d'usinage, c'est-à-dire une discontinuité géométrique due à la sortie de l'outil d'usinage, est donc proscrit dans la surface concave. En effet, un ressaut engendrerait une contrainte importante fragilisant la portion très sollicitée. Or, compte tenu de la précision du soudage, qui est de l'ordre de quelques millimètres, il arrive que le métal d'apport déborde jusque sur la surface concave. Il est alors impossible de supprimer ce métal d'apport, car usiner la surface concave engendrerait un ressaut dans la surface concave. Par ailleurs, ce procédé de réparation ne permet pas de réparer la surface concave du rail lorsque celle-ci est abimée.

On connait du document EP 2 113 330 un procédé de réparation d'un rail de ce type, mais l'usinage crée un ressaut dans la surface concave.

### DESCRIPTION GENERALE DE L'INVENTION

L'invention a pour objet d'apporter un procédé de réparation permettant de réparer un rail amont en évitant un ressaut d'usinage dans la zone concave, et permettant en outre de réparer ladite zone concave si celle-ci est abimée.

L'invention concerne donc un procédé de réparation d'un rail amont d'un carter de turbine de turbomachine, ledit rail amont étant destiné à soutenir un crochet amont d'un distributeur d'un étage de ladite turbine.

Le rail amont comporte :
- Une base comportant une face, dite face radiale, s'étendant sensiblement radialement depuis le corps de carter
- Un plateau comportant une face, dite face supérieure, s'étendant sensiblement selon l'axe longitudinal
- Une portion de raccordement entre la base et le plateau, comportant une face concave raccordant la face radiale et la face supérieure, la face concave et la face radiale s'étendant de part et d'autre d'une arête.

Le procédé de réparation comporte :
- Une étape de recouvrement d'une surface par du métal d'apport, ladite surface comportant la face supérieure et la face concave, de sorte que ledit métal d'apport s'étende sensiblement jusqu'à l'arête
- Une étape d'usinage de la surface recouverte, d'une traite, dans la direction de la face radiale, de sorte à reformer la surface et de sorte à se terminer dans la face radiale de sorte à former un ressaut d'usinage dans ladite face radiale.

L'usinage étant réalisé d'une traite au moins jusqu'à l'arête délimitant la face concave, un ressaut dans la face concave est évité. De plus, les usures de la face concave sont supprimées sans perte d'épaisseur de la portion de raccordement. Le ressaut d'usinage est ainsi localisé sur la face radiale, qui est la zone la moins sollicitée du rail amont.

Outre les caractéristiques qui viennent d'être évoquées dans le paragraphe précédent, le procédé selon l'invention peut présenter une ou plusieurs caractéristiques complémentaires parmi les suivantes, considérées individuellement ou selon toutes les combinaisons techniquement possibles.

Dans un mode de réalisation non limitatif, le procédé comporte une étape supplémentaire d'usinage de la face radiale. Cette étape permet de supprimer des résidus de métal d'apport qui auraient pu se propager sur la face radiale. On note que la profondeur d'usinage doit être faible pour ne pas fragiliser la base. La profondeur d'usinage est par exemple de l'ordre de 0,1 millimètre.

Dans un mode de réalisation non limitatif le recouvrement est réalisé par soudage Tungsten Inert Gas (TIG), ce qui permet un soudage simple et précis.

Dans un mode de réalisation non limitatif, la surface recouverte comporte une face latérale et une face inférieure du plateau. Ainsi, l'usinage d'une traite démarrage au niveau de la face inférieure du plateau. Le plateau est alors complètement reformé.

Dans un mode de réalisation non limitatif, le métal d'apport est de la même matière que le rail amont. Ainsi, le rail reformé par le procédé ne présente pas de discontinuités de matière.

L'invention et ses différentes applications seront mieux comprises à la lecture de la description qui suit et à l'examen des figures qui l'accompagnent.

### BREVE DESCRIPTION DES FIGURES

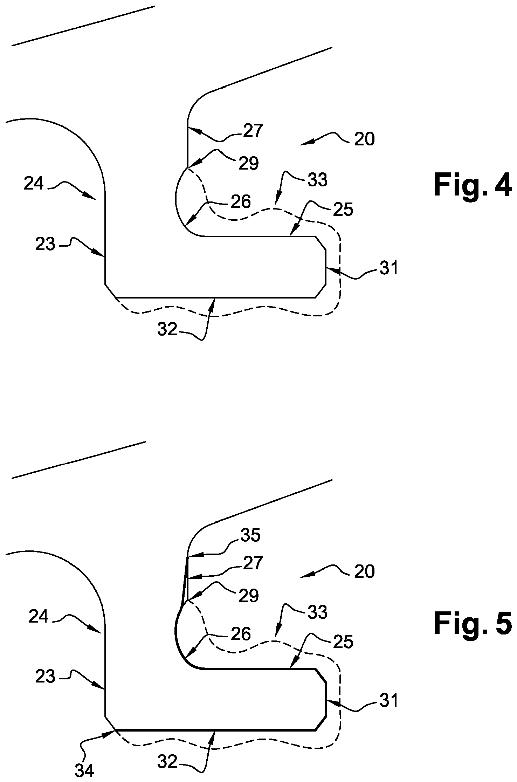

Les figures ne sont présentées qu'à titre indicatif et nullement limitatif de l'invention. Les figures montrent :
- A la figure 1, déjà décrite, une représentation schématique d'un carter comportant des rails pour soutenir un distributeur
- A la figure 2, une représentation schématique d'un rail amont du carter de la figure 1, en vue en coupe longitudinale
- A la figure 3, une représentation schématique des étapes d'un mode de réalisation du procédé selon l'invention
- A la figure 4, une représentation schématique du rail amont de la figure 2, illustrant une étape de recouvrement du procédé
- A la figure 5, une représentation schématique du rail amont de la figure 3, illustrant une étape d'usinage du procédé.

### DESCRIPTION DETAILLEE D'AU MOINS UN MODE DE REALISATION DE L'INVENTION

La figure 2 représente un carter 19 de turbomachine, ladite turbomachine s'étendant globalement selon un axe longitudinal. Plus précisément, la figure 2 est une vue partielle du carter en coupe longitudinale. Ledit carter 19 comporte un corps de carter 21 globalement cylindrique, et une pluralité de rails dont un rail amont 20 annulaire.

En coupe longitudinale, le rail amont 20 est globalement en forme de L, et comporte ainsi plusieurs parties :
- Une base 22 solidaire du corps de carter 21, s'étendant sensiblement radialement depuis le corps de carter 21 en direction de l'axe longitudinal
- Un plateau 23 s'étendant sensiblement longitudinalement depuis l'amont vers l'aval
- Une portion de raccordement 24 raccordant la base 22 et le plateau 23.

On entend par « sensiblement radialement » ou « sensiblement longitudinalement », une extension radiale ou longitudinale à plus ou moins 5°.

Le plateau 23 comporte notamment une face latérale amont 30 et une face latérale aval 31 s'étendant globalement radialement, et une face inférieure 32 s'étendant longitudinalement entre la face latérale amont 30 et la face latérale aval 31. Le plateau 25 comporte en outre une face supérieure 25, s'étendant longitudinalement entre la portion de raccordement 24 et la face latérale aval 31. Un crochet amont de distributeur est destiné à reposer ladite face supérieure 25.

La face supérieure 25 du plateau 23 jouxte une face concave 26 de la portion de raccordement 24, contre laquelle une extrémité du crochet amont est destinée à s'appuyer.

La face concave 26 jouxte une face radiale 27 de la base 22, elle-même surmontée d'une face arrondie 28 de la base 22, ladite face arrondie 28 étant directement liée au corps de carter 21. On note que la face concave 26 et la face radiale 27 sont situées de part et d'autre d'une arête 29.

Sous l'effet du contact avec le distributeur, la face supérieure 25 du plateau et la face concave 26 sont susceptibles de s'abîmer. Or la portion de raccordement 24 étant soumise à de fortes contraintes, un ressaut d'usinage est à éviter sur la face concave 26 de la portion de raccordement 24.

La figure 3 illustre schématiquement des étapes d'un procédé 40 de réparation du rail amont 20. Le procédé 40 comporte :
- Une étape de recouvrement 41 par du métal d'apport 33 d'une surface, ladite surface comportant la face inférieure 32, la face latérale aval 31 et la face supérieure 25 du plateau, et la face concave 26 de la portion de raccordement 24. Le recouvrement est effectué de sorte que le métal d'apport 33 s'étende sensiblement jusqu'à l'arête 29. La figure 4 montre le rail amont 20 du troisième étage de turbine, à l'issue de l'étape de recouvrement. On note que selon un mode de réalisation préféré, le recouvrement est réalisé par soudage Tungsten Inert Gas (TIG), bien connu de l'homme du métier. Par ailleurs, le métal d'apport 33 est idéalement de même matière que le rail amont, pour éviter des discontinuités de matériau dans le rail amont réparé.
- Une étape d'usinage 42 de la surface recouverte, depuis la face inférieure 32 du plateau 23 et dans la direction de la face radiale 27, de sorte que l'usinage se termine dans la face radiale 27. En effet, un ressaut d'usinage dans la face radiale 27 ne risque pas de fragiliser le rail amont 20, la zone proche de la verticale 27 étant la zone moins sollicitée du rail amont 20. L'usinage est réalisé d'une traite afin d'éviter des ressauts d'usinage intermédiaires, et éventuellement en plusieurs passes. A l'issue de l'usinage, la surface est reformée, supprimant les traces d'usures sur la face supérieure 25 du plateau 23 et sur la face concave 26 de la portion de raccordement 24. La figure 5 montre, en tracé épais 34, le profil d'usinage. On note que la face radiale 27 comporte un ressaut d'usinage 35.
- Une étape d'usinage 43 de la face radiale 27 pour supprimer des résidus de métal d'apport 33 qui auraient pu se propager sur la face radiale 27. L'usinage est léger, d'une profondeur maximale de 0,1 millimètre.

Ce procédé permet une sortie de l'outil d'usinage dans la zone la moins sollicitée du rail amont (c'est-à-dire au niveau de la face radiale) et éloignée de la zone d'usure qui a initié la réparation.

On note que ce procédé est adapté pour réparer les rails amont de tous les étages de turbine, bien que ces rails aient des profils légèrement différents. En effet, quels que soient les rails amont à réparer, ils comportent tous une base comportant une face radiale, un plateau comprenant une face supérieure, et une portion de raccordement comportant une face concave.

## Revendications

1. Procédé (40) de réparation d'un rail amont (20) d'un carter (19) de turbine de turbomachine, ledit carter (19) comportant un corps de carter (21) s'étendant selon un axe longitudinal, ledit rail amont (20) comportant :
- Une base (22) comportant une face, dite face radiale (27), s'étendant sensiblement radialement depuis le corps de carter (21)
- Un plateau (23) comportant une face, dite face supérieure (25), s'étendant sensiblement selon l'axe longitudinal
- Une portion de raccordement (24) entre la base (22) et le plateau (23), comportant une face concave (26) raccordant la face radiale (27) et la face supérieure (25), la face concave (26) et la face radiale (27) s'étendant de part et d'autre d'une arête (29),
ledit procédé (40) comportant :
- Une étape de recouvrement (41) d'une surface par du métal d'apport (33), ladite surface comportant la face supérieure (25) et la face concave (26), de sorte que ledit métal d'apport (33) s'étende sensiblement jusqu'à l'arête (29)
- Une étape d'usinage (42) de la surface recouverte, d'une traite, dans la direction de
la face radiale (27), de sorte à reformer la surface, supprimant des traces d'usures sur la face supérieure (25) du plateau (23) et sur la face concave (26) de la portion de raccordement (24), et de sorte à se terminer dans
la face radiale (27) de sorte à former un ressaut d'usinage (35) dans ladite face radiale.

2. Procédé (40) de réparation selon l'une des revendications précédentes, comportant une étape supplémentaire d'usinage (43) de la face radiale (27).

3. Procédé (40) de réparation selon l'une des revendications précédentes, dans lequel le recouvrement (41) est réalisé par soudage Tungsten Inert Gas.

4. Procédé (40) selon l'une des revendications précédentes, dans lequel la surface recouverte comporte une face latérale aval (31) et une face inférieure (32) du plateau (23).

## Patentansprüche

1. Reparaturverfahren (40) einer vorgeschalteten Schiene (20) eines Gehäuses (19) einer Turbine einer Turbomaschine, wobei das genannte Gehäuse (19) einen Gehäusekörper (21) umfasst, der sich gemäß einer Längsachse erstreckt, wobei die genannte vorgeschaltete Schiene (20) umfasst:
- eine Basis (22), umfassend eine Seite, bezeichnet als radiale Seite (27), die sich deutlich radial von dem Gehäusekörper (21) erstreckt;
- ein Plateau (23), umfassend eine Seite, bezeichnet als obere Seite (25), die sich deutlich gemäß der Längsachse erstreckt;
- einen Anschlussabschnitt (24) zwischen der Basis (22) und dem Plateau (23), umfassend eine konkave Seite (26), die die radiale Seite (27) und die obere Seite (25) anschließt, wobei sich die konkave Seite (26) und die radiale Seite (27) auf jeder Seite einer Kante (29) erstrecken;
wobei das genannte Verfahren (40) umfasst:
- einen Abdeckschritt (41) einer Oberfläche durch Eintragungsmaterial (33), wobei die genannte Oberfläche die obere Seite (25) und die konkave Seite (26) derart umfasst, dass sich das genannte Eintragungsmaterial (33) deutlich bis zur Kante (29) erstreckt
- einen Bearbeitungsschritt (42) der in einem Zug in der Richtung der radialen Seite (27) derart abgedeckten Oberfläche, dass die Oberfläche bearbeitet wird, wobei die Verschleißspuren auf der oberen Seite (25) des Plateaus (23) und auf der konkaven Seite (26) des Anschlussabschnitts (24) derart entfernt werden, dass sie in der radialen Seite (27) derart endet, dass ein Bearbeitungsvorsprung (35) in der genannten radialen Seite gebildet wird.

2. Reparaturverfahren (40) gemäß einem der voranstehenden Ansprüche, umfassend einen zusätzlichen Bearbeitungsschritt (43) der radialen Seite (27).

3. Reparaturverfahren (40) gemäß einem der voranstehenden Ansprüche, bei dem das Abdecken (41) per Verschweißen mit inertem Wolframgas realisiert wird.

4. Verfahren (40) gemäß einem der voranstehenden Ansprüche, bei dem die abgedeckte Oberfläche eine nachgeschaltete seitliche Seite (31) und eine untere Seite (32) des Plateaus (23) umfasst.

## Claims

1. A method (40) for repairing an upstream rail (20) of a turbine engine turbine casing (19), said casing (19) including a casing body (21) extending along a longitudinal axis, said upstream rail (20) including:
- a base (22) including a face, referred to as radial face (27), extending substantially radially from the casing body (21),
- a plate (23) including a face, referred to as upper face (25), extending substantially along the longitudinal axis,
- a connection portion (24) between the base (22) and the plate (23), including a concave face (26) connecting the radial face (27) and the upper face (25), the concave face (26) and the radial face (27) extending on either side of an edge (29),
said method (40) including:
- a step of covering (41) a surface with a solder (33), said surface including the upper face (25) and the concave face (26), such that said solder (33) extends substantially until the edge (29),
- a step of machining (42) the covered surface, in a single action, in the direction of the radial face (27), so as to reshape the surface suppressing wear traces on the upper surface (25) of the plate (23) and on the concave face (26) of the connection portion (24), and so as to end in the radial face (27) so as to form a machining springback in said radial face.

2. The repairing method (40) according to one of the previous claims, including a further step of machining (43) the radial face (27).

3. The repairing method (40) according to one of the previous claims, wherein covering (41) is performed by Tungsten Inert Gas welding.

4. The method (40) according to one of the previous claims, wherein the covered surface includes a downstream side face (31) and a lower face (32) of the plate (23).
